Europäisches Patentamt

European Patent Office

Office européen des brevets

(11) Publication number: **0 228 868**
**A2**

## (12) EUROPEAN PATENT APPLICATION

(21) Application number: 86309865.3

(22) Date of filing: **17.12.86**

(51) Int. Cl.⁴: **C08F 226/02** , C08F 220/60 , C02F 1/56

(30) Priority: **18.12.85 GB 8531118**

(43) Date of publication of application:
**15.07.87 Bulletin 87/29**

(84) Designated Contracting States:
**BE DE ES FR GB IT NL SE**

(71) Applicant: **ALLIED COLLOIDS LIMITED**
**P.O. Box 38 Low Moor**
**Bradford West Yorkshire, BD12 0JZ(GB)**

(72) Inventor: **Farrar, David**
**13 Greenfield Lane Idle**
**Bradford West Yorkshire(GB)**
Inventor: **Langley, John**
**4 Wharfedale Gardens§Baildon**
**Shipley§West Yorkshire BD17 6TM(GB)**

(74) Representative: **Lawrence, Peter Robin**
**Broughton et al**
**GILL JENNINGS & EVERY 53-64 Chancery**
**Lane**
**London WC2A 1HN(GB)**

(54) Copolymers and their use.

(57) The molecular weight and/or flocculation or coagulation efficiency of polymers of diallyl monomers such as DADMAC can be increased by copolymerising the monomers with an amide monomer such as MAPTAC.

## Copolymers and their use

The present invention relates to cationic copolymers formed from ethylenically unsaturated monomers, of particular use as flocculants and/or coagulants, for example in mineral processing.

Polymers of diallyldialkylammonium compounds, generally diallyldimethylammonium chloride - (DADMAC), are known for use as flocculants and/or coagulants, as dye fixatives, and for various other purposes. Even when polymerisation is conducted using initiators and polymerisation conditions that maximise molecular weight homopolymers of DADMAC always tend to have a rather low molecular weight, typically having intrinsic viscosity (IV) of not more than about 0.3 or 0.5 dl.g⁻¹. This low molecular weight tends to restrict the usefulness of the compounds. For instance the value of DADMAC polymers as, for instance, flocculants, fluid loss additives, cationic viscosifiers and dye fixatives (especially where chlorine resistance is required) tends to increase with increasing molecular weight.

Polymers having slightly higher molecular weights can be achieved by copolymerisation with, generally, acrylamide but this inevitably results in reduction in the cationicity per mole of the polymers and this tends to be undesirable for many purposes.

There is therefore a need to provide copolymers of diallyl monomers such as DADMAC which have increased molecular weight without reduced cationicity per mole and/or improved performance as flocculants or coagulants.

A water soluble copolymer of the invention is formed from at least one ethylenically unsaturated comonomer and a diallyl monomer of the general formula I

$$[H_2C = CHCH_2N(R^1)(R^2)CH_2CH = CH_2]_n^+ X^{n-} \ ...... \ I$$

in which $R^1$ and $R^2$ are the same or different and may be selected from $C_{1-4}$ alkyl groups and $-CH_2CH_2CONH_2$ or may together with the nitrogen atom to which they are attached form a heterocyclic ring, n is 1, 2 or 3 and $X^{n-}$ is an anion,

and in this polymer the comonomer comprises an amide of the general formula II

$$CH_2 = C(R^3)CONHR^4NR^5R^6 \ ...... \ II$$

and which may be in the form of an acid addition or quaternary ammonium salt, and in which $R^3$ is hydrogen or methyl, $R^4$ is a straight or branched chain $C_{2-8}$-alkylene group having at least two carbon atoms in the backbone and $R^5$ and $R^6$ are the same or different $C_{1-4}$ alkyl groups or may together with the nitrogen atom to which they are attached form a heterocyclic ring,

and the amount of the amide monomer is 0.5 to 30% by weight based on the total weight of monomers I and II.

Generally the copolymer is formed from monomers I and II only, but may sometimes comprise diluent monomer in an amount of up to 100% by weight based on the total weight of monomers I and II usually below 50% and preferably below 20% or 10% by weight. The diluent monomer is, for instance, acrylamide or methacrylamide.

We find that at otherwise identical polymerisation conditions the inclusion of even a very small amount of the amide monomer leads to an increase in IV and that this increase becomes greater as the amount of amide monomer increases. For instance under initiator and polymerisation conditions typical for the production of DADMAC homopolymers of, e.g., IV 0.3 to 0.5 it is easily possible to obtain copolymers according to the invention having IV above 0.5 and up to 2 or higher, with best results generally being achieved when the IV is in the range 0.65 to 1 or 1.5.

The invention permits the production of diallyl polymers having higher molecular weight than can conveniently be obtained in the absence of the MAPTAC or other specified amide comonomer. This is advantageous when making polymers that are resistant to high pH and/or high temperature and that are of use as viscosifiers, fluid loss additives, clarifiers for hot alkaline drinking liquors or Bayer liquors, or as dye fixatives, especially where long term resistance to chlorine-containing wash liquors is required. The polymers are of particular use in liquors that are hot, e.g., above 50 or 60°C, and/or alkaline, e.g., above pH 10 or 11.

As the comonomer is cationic its inclusion does not reduce cationicity per mole and we find surprisingly that copolymers according to the invention having relatively low amounts of the amide comonomer can have better flocculation and coagulation properties than homopolymers having the same IV and formed only from the diallyl monomer. For instance we find that copolymers according to the invention having, say, IV 0.7 can have better flocculation and coagulation performance than the diallyl homopolymer also having IV 0.7. This improvement in performance, at the same IV, is unexpected and the reason for it is unclear.

Since it is easier to make diallyl hompolymers of low IV than higher IV the maximum benefit of the invention is achieved when polymerising the comonomers under conditions that would give an IV for the diallyl homopolymer of, e.g., 0.3 (typically 0.2 to 0.5) but which, due to the presence of the amide monomer, gives an IV typically of 0.7, (e.g., in the range 0.65 to 1), the amount of the amide comonomer being such that the flocculation and/or coagulation performance of the comonomer is improved compared to the performance of the homopolymer of the same IV of, typically, 0.7.

The best combination of molecular weight increase and coagulation/flocculation performance properties is generally achieved when the amount of amide is 0.5% to 10% by weight based on the combined weight of diallyl and amide monomers. In many instances the improvement deteriorates above about 5% and so it is generally preferred that the amount of amide should be from about 1% to about 4% by weight based on the weight of amide and diallyl monomers.

The diallyl monomers of the formula I may be salts of multivalent anions, that is, in which n is 2 or 3, but are generally salts of monovalent anions, usually halides, and most conveniently chloride or bromide. In the formula the groups $R^1$ and $R^2$ are generally the same and are generally selected from ethyl and methyl, preferably methyl.

In the amide monomer of the formula II the group $R^3$ is generally methyl. $R^4$ is preferably a branched $C_{3-7}$alkylene group and may be selected from isopropylene, tertiary butylene, 2-ethyl-1,6-hexylene, and is most preferably 1,3-propylene. $R^5$ and $R^6$ are generally the same and may be ethyl or, more usually, methyl. The units derived from amide monomer II are preferably in the form of an acid salt or more preferably in the form of a quaternary ammonium salt. Any of the suitable known acid salt and quaternary salt forming groups may be used but preferably the salt is the quaternary methyl chloride or dimethylsulphate.

The preferred allyl monomer is diallydimethyl ammonium chloride (DADMAC) and the preferred amide monomer is methacrylamidopropyltrimethylammonium chloride (MAPTAC).

The copolymers can be formed by conventional polymerisation processes similar to those used for producing homopolymers of the diallyldialkyl ammonium salts. The polymerisation can be by solution or bead polymerisation and is often an aqueous bulk solution polymerisation. The polymerisation reaction may be initiated by thermal initiators and or redox initiators systems.

The amount and nature of the initiator present in the polymerisation reaction can influence the molecular weight and should normally be optimised, in the manner conventional for DADMAC hompolymerisation or copolymerisation with acrylamide, so as to give maximum molecular weight.

The polymerisation is generally carried out at a pH of at least 7 and generally in the range 9 to about 13, typically about 10 and a particular advantage of the amide copolymers used in the invention is that not only do they not reduce the cationicity of the polymer but also they are chemically resistant to degradation at the high pH at which the polymerisation is preferably conducted. This is in contrast to other cationic monomers, for instance dialkylaminoalkyl (meth) acrylate monomers or Mannich reaction products of - (meth) acrylamide which would be completely hydrolysed at these high pH conditions during polymerisation so that the final polymer would be of reduced cationicity.

The polymerisation temperature may be allowed to rise to more than 50°C often more than 60°C and sometimes as high as 100 or 110°C. The reaction may be carried out at pressures higher than atmospheric, at which the temperature may be ever higher. The polymers may be recovered by precipitation or other known methods.

The polymerisation can be conducted by forming a blend of the amide and allyl monomers and polymerising this blend to form the final product or such a blend may be polymerised to form a relatively low molecular weight copolymer and then additional blend may be added to a solution of this copolymer and further polymerised to produce the polymer of final molecular weight.

The polymer is of particular value as a primary flocculant or a coagulant and is used by adding a solution of the polymer to the suspension of solids that are to be flocculated or coagulated, followed by separation of the solids in conventional manner. The suspension can be organic or inorganic and can be of a pigment or clay or an organic material such as sewage. The suspension may be a slurry containing a high amount of solids, for example up to 10% by weight, or the aqueous suspension may be a low solids liquor to be clarified, for example having a solids content of as low as 100ppm or less.

The invention is of particular value when the suspension is an inorganic slime, for instance an iron ore or other mineral extraction slime or other slime containing colloidal clay. Other colloidal suspensions that can be treated by the polymers of the invention include organic sewage, especially digested primary activated sewage sludge, de-inking effluents, i.e., the effluent from a de-inking plant and which has to be clarified, and raw water that may be turbid and/or coloured and can be clarified and/or decoloured in the invention.

3

The polymers are resistant to high temperatures and high pH and so can effectively be used in hot and/or alkaline liquors containing organic and/or inorganic solids. For instance they can be used for the clarification of hot alkaline liquor obtained in the Bayer alumina process, for instance for the removal of humate and/or suspended red mud particles.

The following examples illustrate the invention:

## Example 1

A range of copolymers containing varying amounts of DADMAC and MAPTAC were prepared. Aqueous solutions of the monomers were mixed together and the resulting solution adjusted to pH 10.0 using 46% sodium hydroxide solution. The solution was degassed by bubbling nitrogen though the solution for 30 minutes.

An initiator system comprising ammonium persulphate and sodium metabisulphite was added to initiate the reaction which was allowed to continue until the polymerisation was complete.

The polymers were isolated in acetone. The intrinsic viscosity of the polymers was determined. The results are shown in the following table.

## Table 1

| Sample No. | wt% MAPTAC | IV $d/g^{-1}$ |
|---|---|---|
| A | 0 | 0.4 |
| B | 2.5 | 0.70 |
| C | 5.0 | 0.74 |
| D | 10.0 | 0.88 |
| E | 25.0 | 1.53 |

The results show that increasing the proportion of MAPTAC in the monomer mixture increases the IV of the resultant polymer.

## Example 2

Samples B and C of polymer produced in example 1 were compared with samples of two DADMAC homopolymers, 1 and 2, having different solution viscosities and with a cationic polyacrylamide Mannich reaction product. The polymers were tested for their effect on the settlement rate of a 2% china clay slurry, using a range of polymer dosages. The results are shown in table 3. A 40% of 1 has a Brookfield viscosity of 3300cps and a 40% solution of 2 has a Brookfield viscosity of 1000cps.

4

## Table 3

| Polymer | Dose mg/l | Settlement Rate cm/min |
|---|---|---|
| B | 2.5 | 5.55 |
| B | 5.0 | 5.38 |
| C | 2.5 | 4.65 |
| C | 5.0 | 5.22 |
| DADMAC 1 | 2.5 | 5.29 |
| do. | 5.0 | 5.37 |
| DADMAC 2 | 2.5 | 4.02 |
| do. | 5.0 | 4.76 |
| MANNICH | 2.5 | 3.29 |
| do. | 5.0 | 4.24 |

This table shows that sample B, containing 2.5% MAPTAC has properties that are superior to both homopolymers of DADMAC and that are superior to the Mannich polyacrylamide. Sample C, having the higher MAPTAC content, is not quite so effective as the sample containing only 2.5% MAPTAC.

Example 3

The products of Example I were used to aid settlement of a 2% claim clay suspension and to treat a digested primary/activated Rotherham sludge (sludge F) and a Rotherham sludge (sludge G). The settlement times at different doses and the average Capilliary Suction Time (CST) values were as follows:

| Product | % MAPTAC | IV | Settlement time china clay (seconds) 0.5 ppm | 2 ppm | CST Sludge F | Sludge G |
|---|---|---|---|---|---|---|
| A | 0 | 0.4 | 138 | 62 | 97 | 128 |
| B | 2.5 | 0.7 | 113 | 44 | 73 | 106 |
| C | 5.0 | 0.74 | 113 | 53 | 89 | — |
| D | 10.0 | 0.88 | 124 | 59 | 88 | — |
| E | 25.0 | 1.53 | 260 | 135 | 174 | — |

These results show the surprising improvement in flocculation and coagulation properties obtained, at equivalent IV, by the inclusion of a small amount of MAPTAC.

**Claims**

1. A water soluble copolymer of at least one ethylenically unsaturated comonomer with a diallyl monomer of formula I

$[H_2C = CHCH_2N(R^1)(R^2)CH_2CH = CH_2]_n^+ \, X^{n-}$ .... I

in which $R^1$ and $R^2$ are the same or different and may be selected from $C_{1-4}$ alkyl groups and $-CH_2CH_2CONH_2$ or may together with the nitrogen atom to which they are attached form a heterocyclic ring, n is 1, 2 or 3 and $X^{n-}$ is an anion, characterised in that the comonomer comprises an amide monomer of formula II

$CH_2 = C(R^3)CONHR^4NR^5R^6$ .... II

and which may be in the form of an acid addition or quaternary ammonium salt, and in which $R^3$ is hydrogen or methyl, $R^4$ is a straight or branched chain $C_{2-8}$-alkylene group having at least two carbon atoms in the backbone and $R^5$ and $R^6$ are the same or different $C_{1-4}$ alkyl groups or may together with the nitrogen atom to which they are attached form a heterocyclic ring,

and the amount of the amide monomer is 0.5 to 30% by weight based on the total weight of monomers I and II.

2. A copolymer according to claim I in which the comonomer consists substantially only of the said amide monomer.

3. A copolymer according to claim I or claim 2 in which the amount of the said amide monomer is from 0.5 to 10% by weight based on the weight of the said diallyl and amide monomers.

4. A copolymer according to claim I or claim 2 in which the amount of the said amide monomer is from 1 to 4% by weight based on the weight of the said amide and diallyl monomers.

5. A copolymer according to any preceding claim in which, in the diallyl monomer, $R^1$ and $R^2$ are each selected from methyl and ethyl and the anion is selected from chloride and bromide.

6. A copolymer according to any preceding claim in which in the amide monomer, $R^3$ is selected from hydrogen or methyl, $R^4$ is selected from isopropylene, tertiary butylene, 2-ethyl-1,6-hexylene and 1,3-propylene, and $R^5$ and $R^6$ are selected from methyl and ethyl.

7. A copolymner according to any preceding claim in which the amide monomer is present as a salt selected from acid addition and quaternary ammonium salts.

8. A copolymer according to any preceding claim in which the diallyl monomer is diallyldimethyl ammonium chloride and the amide monomer is methacrylamidopropyltrimethyl ammonium chloride.

9. A copolymer according to claim I formed from 96 to 99% diallyldimethyl ammonium chloride and 1 to 4% by weight methacrylamidopropyltrimethyl ammonium chloride.

IO. A copolymer according to any preceding claim having IV 0.5 to 2.0 dl.g$^{-1}$.

II. A process in which a suspension is flocculated or coagulated by adding to the suspension a solution of a polymer and the flocculated or coagulated solids are then separated and in which the polymer is of at least one ethylenically unsaturated comonomer with a diallyl monomer of formula I

$[H_2C = CHCH_2N(R^1)(R^2)CH_2CH = CH_2]_n^+ \, X^{n-}$ .... I

in which $R^1$ and $R^2$ are the same or different and may be selected from $C_{1-4}$ alkyl groups and $-CH_2CH_2CONH_2$ or may together with the nitrogen atom to which they are attached form a heterocyclic ring, n is 1, 2 or 3 and $X^{n-}$ is an anion, characterised in that the comonomer comprises an amide monomer of formula II

$CH_2 = C(R^3)CONHR^4NR^5R^6$ .... II

and which may be in the form of an acid addition or quaternary ammonium salt, and in which $R^3$ is hydrogen or methyl, $R^4$ is a straight or branched chain $C_{2-8}$-alkylene group having at least two carbon atoms in the backbone and $R^5$ and $R^6$ are the same or different $C_{1-4}$ alkyl groups or may together with the nitrogen atom to which they are attached form a heterocyclic ring,

and the amount of the amide monomer is 0.5 to 10% by weight based on the total weight of monomers I and II.

12. A process according to claim II in which the polymer is a copolymer of 96 to 99% diallyldimethyl ammonium chloride and 1 to 4% by weight methacrylamidopropyltrimethyl ammonium chloride.

13. A process according to claim IO or claim II in which the suspension is selected from suspensions of clays, suspensions of pigments, inorganic slimes, de-inking effluent, turbid or coloured water, digested primary activated sewage sludge and hot alkaline liquors.

14. A process in which a polymer according to any of claims I to IO is added to an aqueous liquor having a pH above IO and/or a temperature above 50°C.

15. A process in which a polymer according to any of claims I to IO is used as a dye fixative.